# FASCICULE DE BREVET EUROPEEN

(11) **EP 0 552 822 B1**
(45) Date de publication et mention de la délivrance du brevet: **19.05.1999**
(21) Numéro de dépôt: 93105918.2
(22) Date de dépôt: 21.04.1989
(51) Int. Cl.: G06F 1/00, G06K 7/00, G07F 7/10

(54) **Dispositif portable électronique pour établir une liaison sécurisée avec un serveur via un terminal**
Tragbares elektronisches Gerät zur Herstellung einer geschützten Verbindung mit einem Datenanbieter mittels Endgerät
Hand-held electronic device for establishing a secure connection with a host via a terminal

(30) Priorité: 21.04.1988 FR 8805306
(43) Date de publication de la demande: 28.07.1993
(62) Demande divisionnaire de: 89401130.3
(73) Titulaire: ACTIVCARD EUROPE, 92156 Suresnes Cédex (FR)
(72) Inventeur: Audebert, Yves, F-78290 Croissy sur Seine (FR); Delahaye, Achille, F-94430 Chennevières sur Marne (FR)
(74) Mandataire: Colas, Jean-Pierre

(56) Documents cités:
- EP-A- 0 234 954
- WO-A-87/01835
- WO-A-87/03977
- FR-A- 2 582 421
- FR-A- 2 588 396
- IBM TECHNICAL DISCLOSURE BULLETIN., vol.28, no.3, Aoüt 1985, NEW YORK US pages 1109 - 1122 'Transaction completion code based on digital signatures'
- TOSHIBA REVIEW, no.159, 1987, TOKYO JP pages 30 - 33 TAMADA ET AL. 'IC card system'
- IBM TECHNICAL DISCLOSURE BULLETIN., vol.30, no.3, Aoüt 1987, NEW YORK US pages 1262 - 1265 'Personal transaction card'
- LA RECHERCHE, vol.17, no.176, Avril 1986, PARIS FR, XP97270 UGON ET AL. 'Les cartes à puce'
- ONDE ELECTRIQUE, vol.64, no.1, Janvier 1984, PARIS FR pages 18 - 23 GUION CHRISTIAN 'La carte à mémoire: choix technologiques et caractéristiques'

## Description

L'invention est relative à un dispositif portable électronique pour établir une liaison sécurisée avec un serveur via un terminal.

Il est connu du document WO 87/01835 un tel dispositif comprenant des premiers moyens d'interface pour au moins recevoir des données du serveur via ledit terminal, des seconds moyens d'interface comprenant un clavier et un afficheur pour l'entrée et la lecture de données par un utilisateur dudit dispositif, un microcalculateur propre à traiter les données reçues par le dispositif, des moyens de mémorisation de données à accès protégé et une source d'énergie électrique pour alimenter les divers circuits, ledit microcalculateur étant programmé pour assurer une fonction d'authentification au niveau du serveur en calculant, à partir d'informations provenant du serveur via ledit terminal et lesdits premiers moyens d'interface, suivant un algorithme, un code d'authentification qui est transmis au serveur via ledit terminal, un calcul de code étant également effectué par le serveur, suivant un algorithme semblable à partir desdites informations transmises audit dispositif, l'accès au serveur à partir dudit terminal étant autorisé lorsqu'il y a cohérence entre les codes calculés par le serveur et le microcalculateur et refusé dans le cas contraire.

Un tel dispositif portable électronique offre un degré d'application limité au contrôle d'accès à un système informatique.

Le document IBM Technical Disclosure Bulletin, vol 28, n° 3, August 1985, pages 1109-1121 intitulé "Transaction completion code based on digital signatures" décrit un procédé de signature numérique de transactions électroniques effectuées au moyen d'une carte à circuit intégré chez un commerçant doté d'un terminal spécialisé.

L'invention a pour but de fournir un dispositif portable électronique, tel que défini au préambule de la revendication 1, qui permette d'accomplir un maximum de fonctions et d'applications tout en conservant une sûreté d'emploi suffisante et une protection efficace contre des utilisations frauduleuses.

Il est souhaitable, en outre, qu'un tel dispositif reste d'un encombrement réduit, d'un prix relativement bas pour permettre sa diffusion à grande échelle, et d'une mise en oeuvre simple.

Un dispositif portable électronique tel que défini dans la revendication 1 offre un fonctionnement autonome en ce sens qu'une fois qu'une somme de valeur déterminée, telle qu'une certaine somme d'argent, a été stockée en mémoire, l'utilisateur peut accéder à des services, des paris ou des jeux indépendamment de tout lien avec le serveur.

D'autres caractéristiques de l'invention sont définies dans les sous-revendications.

Le dispositif comporte, en dehors d'une horloge système propre au microcalculateur, une horloge temps réel permettant de donner au dispositif une durée de vie limitée, faire fonctionner le dispositif suivant des tranches horaires et/ou dater les opérations, notamment utilisations et transactions effectuées avec ce dispositif portable.

Le dispositif comporte une mémoire morte (ROM) organisée en deux zones, à savoir :
- une zone programme dans laquelle sont stockées les instructions relatives à :
   - la fonction de décodage et réception optique ;
   - la fonction d'identification ;
   - la fonction d'authentification ;
   - les fonctions applicatives, telles que pari, jeu télévisé, porte-monnaie, télé-achat ;
- et une zone fabrication pour mémoriser les informations relatives à la fabrication de la carte et pour initialiser le produit, ces informations concernant :
   - le code client ;
   - le numéro du masque utilisé pour le microcalculateur ;
   - la clé de fabrication, notamment constituée par 128 bits, permettant le contrôle de la personnalisation.

La mémoire de stockage du dispositif est également organisée en deux zones, à savoir :
- une zone données, pour le stockage d'informations concernant, par exemple, un pari, un jeu, un montant, un nombre de films visionnés dans le cadre d'une télévision à péage, des certificats de transaction, etc... ;
- et une zone personnalisation contenant les informations relatives :
   - au code confidentiel (identification);
   - à la clé secrète d'authentification ;
   - aux paramètres d'exploitation (par exemple blocage de la carte au bout de quatre essais infructueux d'identification) ;
   - les diverses clés secrètes éventuellement nécessaires pour les fonctions applicatives.

La mémoire de stockage peut être une PROM ou une EEPROM, comme dans les cartes à mémoire ou à microprocesseur, ou une RAM sauvegardée.

Les solutions PROM ou EEPROM nécessitent des tensions et courants d'alimentation relativement importants. Pour des raisons de sécurité, ces mémoires ne peuvent être programmées de l'extérieur nécessitant, comme sur la carte à microprocesseur, une autoprogrammation par le microcalculateur. Ces solutions offrent un bon degré de sécurité mais sont onéreuses ; elles se justifient cependant pour certaines applications.

Une solution plus simple et moins chère est avantageusement réalisée à partir d'une RAM (mémoire vive), interne au microcalculateur, sauvegardée par l'alimentation du dispositif avec un courant très faible et dont l'accès en écriture pour la zone personnalisation peut être protégée, notamment par un fusible qui est grillé après la phase de personnalisation.

Le microcalculateur comporte un bus de données et un bus d'adresses non accessibles de l'extérieur, de telle sorte qu'on ne peut lire ni modifier frauduleusement, de l'extérieur, les informations du dispositif.

Le clavier du dispositif est de préférence un clavier numérique comportant douze à seize touches, à savoir dix touches correspondant aux chiffres 0̸ à 9 et deux à six touches fonctions supplémentaires qui peuvent avantageusement être personnalisées en fonction de l'application (pari, jeu, télévision à péage). L'afficheur est du type alphanumérique LCD.

L'invention consiste, mises à part les dispositions exposées ci-dessus, en un certain nombre d'autres dispositions dont il sera plus explicitement question ci-après à propos d'un mode de réalisation particulier décrit avec référence aux dessins ci-annexés, mais qui n'est nullement limitatif.

La figure 1, de ces dessins, est un schéma synoptique simplifié d'un dispositif portable électronique conforme à l'invention.

La figure 2 est une vue en plan du dispositif.

La figure 3 est une vue suivant la flèche III, figure 2.

La figure 4 est une vue suivant la flèche IV, figure 2.

La figure 5 est un schéma illustrant le principe de l'identification et de l'authentification.

La figure 6 est un schéma illustrant la seule fonction d'identification.

La figure 7 est un schéma illustrant la fonction d'authentification.

La figure 8 est un schéma illustrant l'utilisation d'un dispositif selon l'invention avec un boîtier d'adaptation directement raccordé à un terminal.

La figure 9 est un schéma illustrant le scénario de connexion entre un terminal et un serveur en utilisant le dispositif de l'invention.

La figure 10̸ est un schéma semblable à celui de la figure 9, pour une fonction porte-monnaie.

La figure 11 est un schéma illustrant l'intérêt du dispositif de lecture à trois phototransistors pour des écrans de tailles différentes.

La figure 12 est un schéma d'un circuit d'autoadaptativité à un écran.

La figure 13, enfin, est un diagramme illustrant le fonctionnment du circuit de la figure 12.

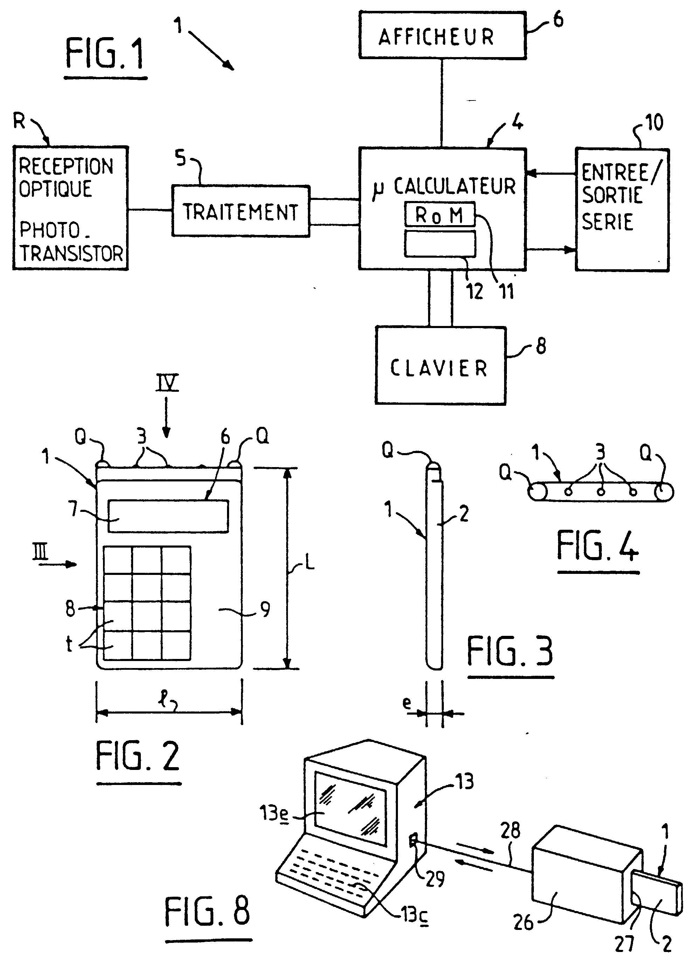

En se reportant aux dessins, notamment aux figures 1 à 4, on peut voir un dispositif portable électronique 1, du genre carte à mémoire, comprenant un boîtier extérieur 2 de forme parallélépipédique rectangle, et dont l'épaisseur e (figure 3) est faible, notamment de l'ordre de 5 mm. La largeur l et la longueur L du boîtier peuvent être égales à celles utilisées de manière générale pour les cartes de crédit, cartes bancaires, etc..., c'est-à-dire de l'ordre de 54 mm pour l et de 85 mm pour L.

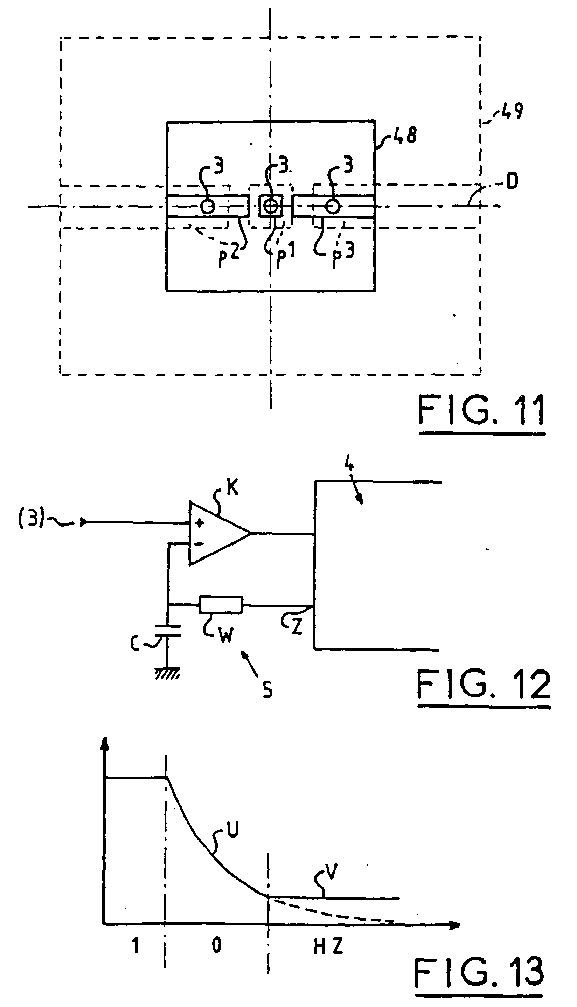

Le dispositif comprend au moins des moyens de réception optique R avantageusement constitués par des phototransistors 3 (figure 4) disposés sur la tranche d'un petit côté du boîtier 2, et en particulier alignés. Dans l'exemple considéré, les phototransistors sont au nombre de trois. La figure 11 illustre l'intérêt du dispositif de lecture à au plus trois phototransistors 3, pour des écrans 48, 49 de tailles différentes. L'écran 48 correspond à la plus petite taille, et l'écran 49 à la plus grande taille.

Lorsque l'on passe d'une taille d'écran à une autre, l'écartement entre les centres des pavés lumineux p1, p2, p3 va changer, alors que l'écartement entre les phototransistors 3 reste constant.

Avec la disposition à au plus trois phototransistors, l'ensemble des pavés est toujours centré et il est possible d'allonger les pavés droite et gauche p2, p3, suivant la direction d'alignement D des phototransistors, de manière à être sûr que, quelle que soit la taille de l'écran, les phototransistors droite et gauche se trouvent toujours en face d'une partie des pavés p2, p3 correspondants.

L'écran d'un terminal a généralement une forme convexe. Pour faciliter l'application de la tranche du boîtier 2, munie des phototransistors 3, contre cet écran, on prévoit avantageusement, à chaque extrémité de la tranche, un tampon Q (voir figure 2), notamment en matière élastomère et de forme sensiblement hémisphérique, faisant saillie sur cette tranche.

Les moyens de réception R, comme illustré sur la figure 1, sont reliés à un microcalculateur 4, par l'intermédiaire de moyens de traitement 5 propres à réaliser une auto-adaptativité à un écran de terminal 13.

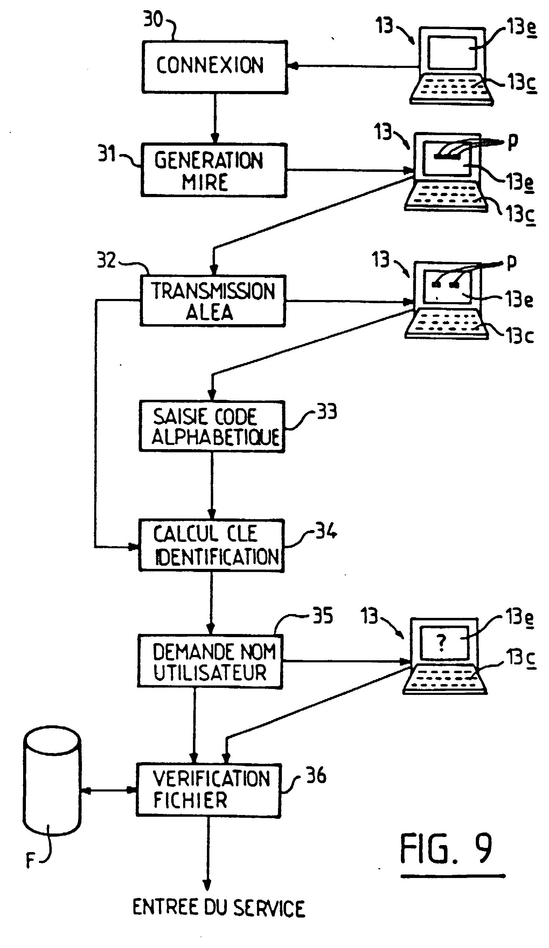

En effet, la transmission d'informations destinées aux moyens R s'effectue par une séquence de pavés lumineux et sombres p (voir figure 8) qui apparaissent en une zone prédéterminée d'un écran 13e de terminal 13 ; en raison des variations de luminosité d'un écran de terminal à un autre, il est possible qu'un pavé sombre d'un terminal soit plus lumineux qu'un pavé éclairé d'un autre terminal. Pour éviter les distorsions de lecture d'un terminal à l'autre, les moyens de traitement 5 sont prévus pour permettre, au cours d'une phase d'initialisation, d'ajuster un seuil de comparaison en fonction de la luminosité de l'écran du terminal. Pour tenir compte de la dispersion de sensibilité des phototransistors, le seuil de comparaison peut être défini pour chacun des phototransistors.

Comme visible sur la figure 12, ce seuil peut être obtenu par la décharge d'une capacité C, sous le contrôle du microcalculateur 4, à travers une résistance W. La charge et la décharge de la capacité C sont contrôlées par le microcalculateur 4 à travers la résistance W au moyen d'un port d'entrée/sortie Z qui peut être placé dans les états suivants : état haut ("1") pour la charge de la capacité C, état bas ("0̸") pour sa décharge ; état haute impédance ("HZ") par le maintien du seuil pendant la réception. Un comparateur K reçoit, sur une entrée + le signal provenant des phototransistors et sur l'autre entrée - la tension aux bornes de la capacité C, seuil de comparaison. Avant mise en service, la capacité C est chargée à sa valeur maximale. Pendant l'initialisation, la capacité C se décharge comme représenté par l'arc de courbe U de la figure 13 (tension aux bornes de la capacité en ordonnées, temps en abscisse), jusqu'à atteindre la valeur souhaitée, fonction du niveau de réception et déterminée par le microcalculateur. Le seuil de comparaison est alors maintenu constant comme représenté par le segment V de la figure 13, pendant la réception. Ce seuil de comparaison est donc fonction du niveau de réception optique. Ce seuil variable peut être complété par un seul fixe pour les faibles luminosités. Le même effet peut être obtenu en contrôlant le gain d'un amplificateur par le microcalculateur.

Le codage de la transmission optique est défini de manière à diminuer le temps de transmission et s'adapter à tous les réseaux et protocoles reliant le terminal au système central. Les caractéristiques principales de cette transmission dans le cadre d'un système informatique sont qu'il est seulement possible de maîtriser le séquencement des pavés affichés mais pas les temps d'affichage. Ces caractéristiques justifient l'utilisation d'au moins deux phototransistors pour la transmission si on sur un écran informatique. Les caractéristiques de transmission sur télévision hertzienne ou câblée permettent le contrôle des temps d'affichage offrant la possibilité d'une transmission synchrone par l'intermédiaire d'un seul phototransistor. La synchronisation de la transmission s'effectue à l'aide du balayage video. Ceci permet au dispositif portable lorsqu'il est utilisé avec la télévision de fonctionner et recevoir les informations à distance (quelques mètres) en pointant le produit vers l'écran.

Les fonctions de réception et décodage optiques inscrites dans la mémoire du microcalculateur du dispositif portable pourront être spécifiques au mode d'exploitation , télématique ou télévision, mais le même dispositif pourra fonctionner sur les deux supports en utilisant un ou trois phototransistors.

Le dispositif 1 comprend un afficheur 6, de préférence à cristaux liquides (LCD), formant un écran rectangulaire 7 (figure 2) sur le boîtier. De préférence, cet écran 7 est prévu pour afficher huit caractères alphanumériques, alignés. L'afficheur 6 permet de visualiser des informations provenant du microcalculateur 4.

Une source d'énergie électrique, généralement constituée par une pile électrique de dimensions réduites (non représentée sur les dessins), est prévue pour alimenter les divers circuits.

Le dispositif comporte un clavier 8 notamment constitué, comme représenté sur la figure 2, par douze touches t correspondant respectivement aux dix chiffres 0̸ à 9. Les touches t sont disposées en quatre rangées de trois, parallèles à l'écran 7. Le clavier 8 est disposé adjacent à un bord du boîtier 2, le bord gauche selon la représentation de la figure 2, pour qu'une surface 9, relativement importante, soit dégagée sur la droite et exploitable graphiquement.

Le clavier 8 permet à l'utilisateur d'entrer également des informations dans le microcalculateur 4.

Avantageusement, le boîtier 2 comporte des moyens d'entrée-sortie série 10̸ reliés au microcalculateur 4. Ces moyens peuvent être une prise ou des moyens de couplage optique, l'entrée optique pouvant avantageusement être réalisée par un des trois phototransistors. Une telle prise 10̸ permet un raccordement direct sur une prise prévue dans un boîter d'adaptation 26 dont il sera question à propos de la figure 8.

Le microcalculateur 4 est un microcalculateur masqué, en technologie C MOS. Il peut être du type MC 68 HC 0̸5B6, de "Motorola", pour une version microcalculateur autoprogrammable, ou du type NEC 7530̸8 pour une version à mémoire de stockage RAM, ou alors du type circuit spécifique (ASIC) pour une version à RAM protégée. Le circuit spécifique sera développé à partir d'un microcalculateur standard des types précédents dans lesquels on inclura les moyens de protection de la mémoire. Ces moyens de protection pourront être constitués par un fusible grillé après écriture de la mémoire. Il comporte une mémoire morte (ROM) 11 et une mémoire de stockage 12.

La mémoire morte 11 est organisée en deux zones à savoir une zone programme et une zone fabrication, dont il sera question plus loin.

La mémoire 12 est également organisée en deux zones à savoir une zone données, et une zone personnalisation, dont il sera question plus loin.

Le bus de données et le bus d'adresses (non représentés sur les dessins) du microcalculateur 4 ne sont pas accessibles de l'extérieur, de manière à rendre impossible une lecture ou une modification frauduieuse, depuis l'extérieur, des informations contenues par le dispositif 1.

Le microcalculateur 4 est programmé (les instructions du programme sont stockées dans la mémoire morte 11) pour ne rendre actif le dispositif qu'après introduction, sur le clavier 8, d'un code confidentiel d'identification PIN de l'utilisateur du dispositif. Ce code confidentiel est connu seulement du titulaire du dispositif 1.

Une temporisation on est avantageusement prévue pour faire retourner le microcalculateur 4 à l'état de repos au bout d'un temps prédéterminé, notamment de 4 minutes, après que ce microcalculateur a été activé par entrée du code confidentiel correct. L'état de repos du microcalculateur 4 correspond à un état dans lequel ce microcalculateur ne prend pas en compte les informations provenant des moyens de réception R.

Le programme stocké dans la mémoire 11 est en outre prévu pour bloquer le dispositif 1 après entrée consécutive d'un certain nombre de codes confidentiels erronés sur le clavier 8, par exemple quatre codes. Le dispositif 1 devient alors inutilisable, et la réactivation du dispositif ne peut être assuré que par une procédure spéciale par exemple sur un centre serveur.

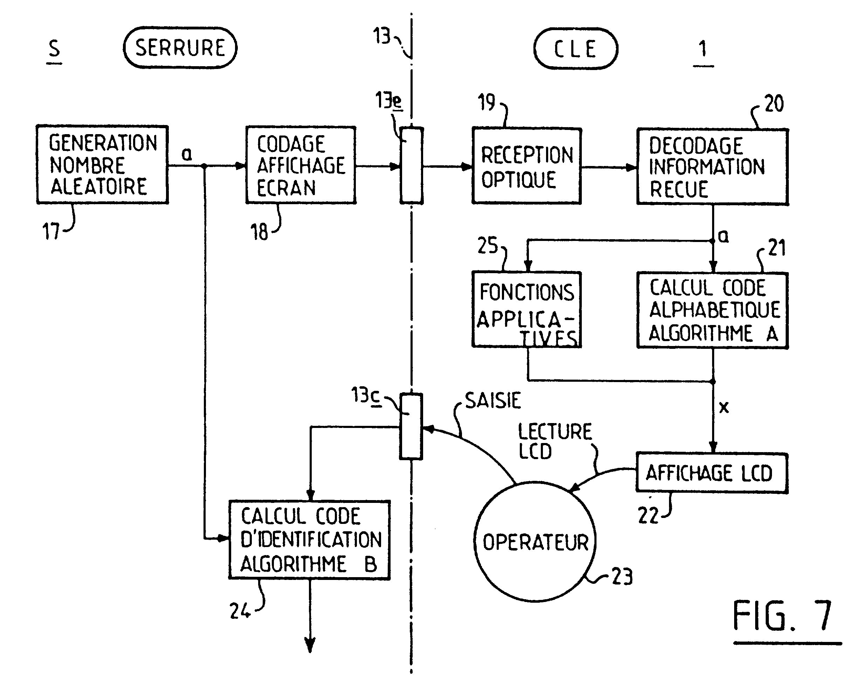

Le dispositif 1 étant, en application de base, destiné à autoriser une connexion sur un serveur, à partir d'un terminal 13 ou équivalent (console de "MINITEL"), le microcalculateur 4 est programmé (instructions stockées dans la zone programme de la mémoire 11) pour assurer une fonction d'authentification vis-à-vis du serveur S. Pour cela le microcalculateur calcule, à partir d'informations provenant du serveur, suivant un algorithme, un code qui apparaît sur l'afficheur 6. L'utilisateur doit alors entrer ce code sur le clavier 13c d'un terminal i3 (voir figures 7 et 9) relié au serveur. Le calcul d'un code est effectué également par le serveur, suivant un algorithme semblable, et une comparaison du code calculé par le serveur et du code introduit par l'utilisateur est effectué par le serveur ; si une cohérence est constatée entre les deux codes, l'accès au serveur est donné à l'utilisateur ; si aucune cohérence n'apparaît entre les deux codes calculés, l'accès au serveur reste interdit à l'utilisateur.

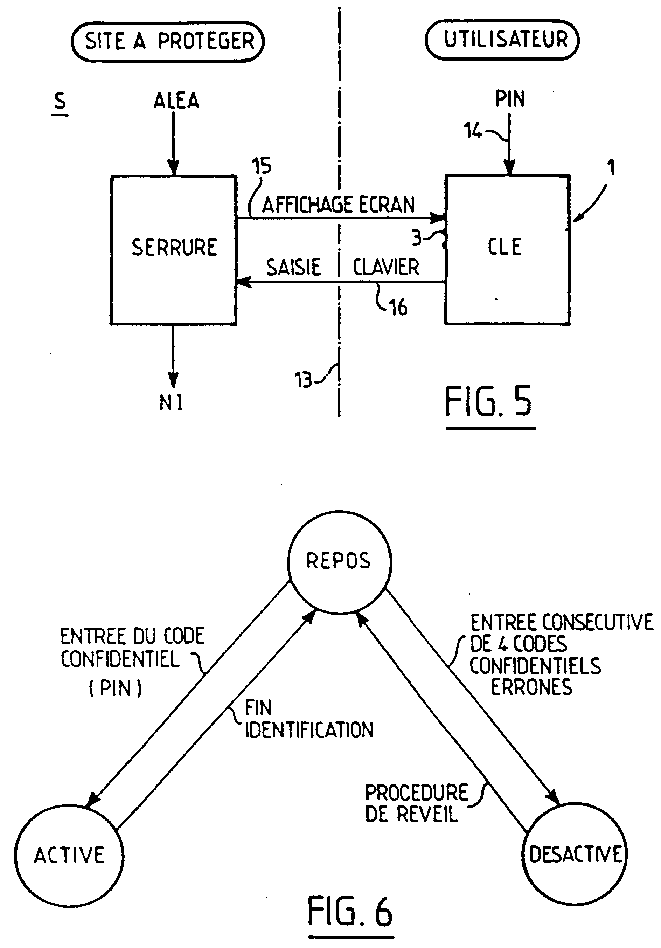

Les figures 5 à 7, et la figure 9 permettent de mieux illustrer ces caractéristiques.

Sur la figure 5 on a schématiquement représenté en S le serveur ou site à protéger, sur la partie gauche de cette figure. Le trait mixte 13 représente schématiquement un terminal, constituant une interface, située à distance du serveur S et reliée, par exemple par un câble, à ce dernier. Ce terminal 13 comporte un écran et un clavier non représentés sur la figure 5. Le dispositif 1 conforme à l'invention est schématiquement représenté sur la partie droite de cette figure 5. Pour pouvoir accéder au serveur S depuis le terminal 13, l'utilisateur doit d'abord introduire son code personnel d'identification PIN sur le clavier 8 du dispositif 1, ce qui est schématisé par la flèche 14.

Si le code est correct, le dispositif 1 est prêt à recevoir des informations, ce qui peut être signalé par un message sur l'écran 7 (figure 2).

Le déroulement des opérations sera décrit plus en détail à propos des figures 7 et 9. Le schéma de la figure 5 fait apparaître que, lors de l'authentification, le dispositif 1 se comporte comme une clé, tandis que le serveur S se comporte comme une serrure. La flèche 15 symbolise l'affichage sur l'écran du terminal 13 d' informations provenant du serveur, tandis que la flèche 16 symbolise la saisie d'informations à partir du clavier du terminal 13.

Le schéma de la figure 6 illustre la fonction d'identification.

Initialement, le dispositif 1 est à l'état de repos schématisé par le cercle supérieur du schéma.

L'entrée du code confidentiel, par l'utilisateur, sur le clavier 8 fait passer le dispositif à l'état activé schématisé par le cercle situé en bas à gauche de la figure 6. Dans cet état, le dispositif est propre à recevoir et à traiter les informations optiques apparaissant sur le terminal, pour permettre à l'utilisateur d'accéder à un serveur.

Au bout d'un temps prédéterminé par une temporisation, notamment de l'ordre de 4 minutes, qui correspond à la fin de la fonction d'identification, le dispositif 1 retourne à l'état de repos.

S'il y a entrée consécutive de plusieurs codes confidentiels erronés, par exemple quatre codes successifs erronés, le dispositif 1 passe de l'état de repos à un état désactivé représenté par un cercle situé à droite sur la figure 6, interdisant toute utilisation du dispositif.

Le retour de l'état désactivé à l'état de repos ne peut être assuré que par une procédure de réveil qui ne peut être effectuée que sur un centre serveur, dans l'exemple décrit.

La figure 7 est un schéma fonctionnel illustrant la fonction d'authentification évoquée à propos du schéma de la figure 5. La partie gauche de cette figure correspond à l'automate de communication ou serrure du serveur S. La partie située à droite du trait mixte (lequel schématise le terminal 13) correspond à la clé constituée par le dispositif 1.

Le bloc 17 correspond à la génération d'un nombre aléatoire a par le serveur S. Le bloc 18 correspond au codage et à l'affichage sur l'écran 13e du terminal. Le bloc 19 correspond à la réception optique, par les phototransistors 3 du dispositif 1. Le bloc 20̸ correspond au décodage, par le microcalculateur 4, de l'information reçue. Le bloc 21 correspond au calcul par le microcalculateur 4, du code alphabétique, à partir de l'information reçue a, suivant un algorithme A. Le bloc 22 correspond à l'affichage sur l'écran 7 du dispositif 1 du résultat x correspondant au code calculé en 21.

L'utilisateur ou opérateur, schématisé par un cercle 23, après lecture sur l'écran 7, introduit sur le clavier 13c du terminal 13 le code affiché sur l'écran 7.

Le bloc 24 correspond, dans le serveur S, au calcul d'un code d'identification suivant un algorithme B à partir du nombre aléatoire a, et à la comparaison de ce code calculé, dans le serveur S, avec celui introduit par l'opérateur 23 sur le clavier 13c.

Si la comparaison entre les deux codes établit une cohérence, en accord avec les algorithmes A et B, l'accès du système est donné à l'opérateur 23.

En cas d'absence de cohérence, l'accès demeure interdit.

Le bloc 25, relatif au dispositif 1, concerne des fonctions applicatives programmées dans le microcalculateur 4, telles que jeux de télévision, télé pari, télévision à péage, porte-monnaie, télé-achat.

Certaines opérations nécessitent de maintenir relativement longtemps le boîtier 1 contre l'écran 13e du terminal pour les échanges d'informations.

Pour éviter à l'opérateur d'avoir à tenir le boîtier 2, on peut prévoir un boîtier d'adaptation 26 (figure 8) pour la mise en oeuvre des fonctions nécessitant un échange d'informations important. Ce boîtier comporte un logement débouchant, à l'extérieur, par une ouverture 27 dans laquelle peut être engagé le boîtier 2 du dispositif. Le fond du logement 27 est équipé de moyens complémentaires des moyens 10̸ (figure 1). Le boîtier 26 est raccordé à un câble 28 dont l'autre extrémité peut être branchée sur une prise 29, notamment du type RS 232 C, du terminal 13 ou sur la prise péri-informatique du MINITEL.

La figure 9 est un schéma du scénario de connexion d'un terminal 13 à un serveur S, à l'aide du dispositif 1 de l'invention. Cette figure 9 explicite les fonctions décrites à propos de la figure 7.

L'opérateur, à partir du terminal 13, établit tout d'abord la connexion avec le serveur S, en tapant, sur le clavier 13c du terminal 13, un numéro prédéterminé. Le bloc 30̸ correspond à l'établissement de la connexion. Le serveur S génère une mire (bloc 31) c'est-à-dire fait apparaître sur l'écran 13e du terminal des pavés lumineux p qui, dans l'exemple considéré, sont constitués par trois rectangles alignés comme représenté sur la figure 9.

L'utilisateur présente alors le dispositif 1 manière à placer les phototransistors 3 en face des pavés p. Le dispositif 1 est en place pour recevoir les informations par voie optique. Bien entendu, auparavant, l'utilisateur a dû valider le dispositif 1 en introduisant sur le clavier 8 du boîtier 2 son code confidentiel permettant son identification.

L'utilisateur appuie alors sur une touche du clavier 13c du terminal. Le serveur S, en réponse à l'enfoncement de la touche du clavier 13c, génère et transmet, au terminal 13, sous forme codée, un nombre aléatoire, comme indiqué par le bloc 32. Les informations correspondant à ce nombre aléatoire se traduisent sur l'écran 13e par des variations de niveaux de luminosité des pavés p, informations qui sont reçues par le dispositif 1. Ce dernier fait apparaître sur l'écran 7 un code alphabétique ou alphanumérique que l'utilisateur introduit sur le clavier 13c, ce qui correspond au bloc 33 de saisie par le serveur S.

Le bloc 34 correspond au calcul, par le serveur S, du code à partir du nombre aléatoire généré en 32, et à la comparaison de ce code calculé avec celui fourni à partir du clavier 13c.

Lorsqu'il y a cohérence de ces deux codes, le serveur S peut compléter l'identification de l'utilisateur, avant de donner accès au service, en demandant le nom de l'utilisateur (bloc 35). L'utilisateur tape alors son nom sur le clavier 13c.

La dernière étape accomplie par le serveur, avant de donner accès au service, est de vérifier, dans un fichier F, comme indiqué par le bloc 36, la concordance entre la clé d'identification, le nom et les droits d'accès. Lorsque la concordance est établie, l'utilisateur est connecté au service qu'il peut utiliser.

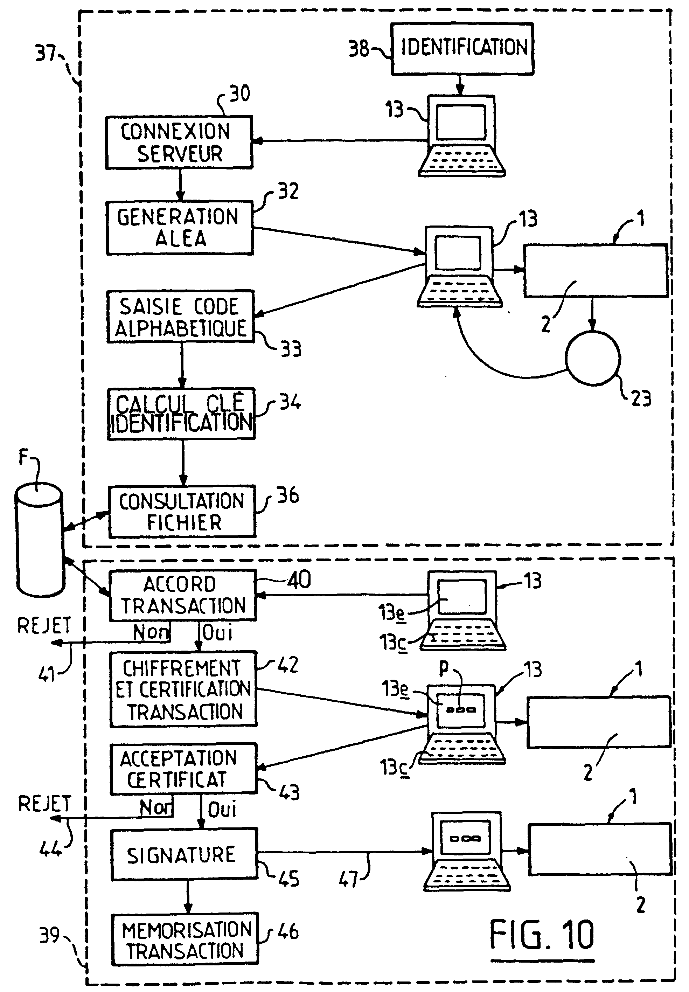

La figure 10̸ est un schéma illustrant une fonction porte-monnaie qui peut être assurée par le dispositif 1 de l'invention.

Cette fonction permet le chargement d'une somme d'argent prédéterminée ou d'un nombre de jetons dans le dispositif 1, plus précisément dans la mémoire de stockage 12 de ce dispositif, à partir d'un serveur S dans lequel le détenteur du dispositif 1 a préalablement ouvert et approvisionné un compte. Cette fonction permet, ensuite, d'accéder à des services du type télévision à péage, par abonnement ou à la consommation, ou à des paris, ou d'autres applications par prélèvement sur la somme d'argent qui a été chargée dans la mémoire de stockage 12 du dispositif 1.

Le schéma de la figure 10̸ présente un exemple d'implantation de la fonction porte-monnaie.

Les premières étapes de ce programme correspondent à la mise en oeuvre préalable des fonctions d'identification du porteur du dispositif 1 et d'authentification de ce porteur vis à vis du serveur. Ces étapes ont été représentées à l'intérieur d'un rectangle 37 et correspondent, sensiblement, à la figure 9 simplifiée, certaines étapes intermédiaires n'ayant pas été reprises dans le rectangle 37. Les mêmes références ont été utilisées sur la figure 10̸ pour désigner des blocs semblables à ceux de la figure 9 sans que leur description soit reprise. Le bloc 38 correspond à l'identification de l'utilisateur par introduction du code PIN confidentiel sur le clavier 8 du boîtier 2.

Le rectangle 39 englobe les étapes du programme concernant les opérations après que l'entrée du service porte-monnaie a été donnée à l'utilisateur qui se trouve devant le terminal 13 avec son dispositif 1.

L'utilisateur, à partir du terminal 13, effectue, sur le clavier 13c, une demande de chargement, sur son dispositif 1, d'une somme d'argent d'un montant déterminé. L'examen de cette demande est effectué dans le bloc 40̸ ; le serveur S interroge son fichier F pour savoir si le crédit du compte de l'utilisateur est suffisant pour permettre le chargement de la somme demandée. Si la réponse est négative, la demande est rejetée comme schématisé par la sortie 41.

Si la réponse est affirmative, le programme du serveur S passe à l'étape 42 pour le chiffrement et la certification de la transaction. Le serveur S transmet les informations correspondantes au terminal 13, ces informations apparaissant sous la forme de pavés lumineux p clairs ou obscurs sur l'écran 13e. Le dispositif 1 est appliqué, par l'utilisateur, contre l'écran 13e par sa tranche munie des phototransistors 3 pour recueillir les informations contenues dans les pavés p.

L'utilisateur ou opérateur doit alors taper sur le clavier 13c une instruction correspondant soit à l'acceptation du certificat de transaction et de la somme annoncée par le serveur S, soit refuser le certificat ; l'absence de réponse de l'opérateur sera considérée comme un refus.

Le bloc 43 correspond à l'étape du programme du serveur S qui fait suite à la réponse de l'opérateur. Si cette réponse est négative, la transaction est rejetée en 44. Si la réponse est positive, le programme du serveur passe à l'étape suivante représentée par le bloc 45 correspondant à la signature, c'est-à-dire que, du côté du serveur, les informations relatives à la transaction sont mémorisées comme indiqué par le bloc 46, tandis que du côté dispositif 1 la somme demandée par l'opérateur est effectivement stockée dans la mémoire de stockage 12 du dispositif 1 suite aux informations transmises par le serveur comme schématisé par la flèche 47.

On peut prévoir, également, de mémoriser dans le dispositif 1 les informations relatives à la transaction opérée (certificat de transaction stocké dans le dispositif 1).

Cette application porte-monnaie peut être avantageusement mise en oeuvre à l'aide du boîtier d'adaptation 26.

Inversement, à partir d'un dispositif 1 dans lequel a été chargée une somme d'argent, il est possible d'accéder à des services, des paris, ou des jeux, en prélevant la somme à payer sur celle stockée dans la mémoire de stockage 12.

Ce paiement permet, en particulier, la mise en oeuvre locale d'application de jeu ou télé pari (jeux de hasard, loteries, matches, courses de chevaux, ou analogues, etc...), notamment à partir d'une télévision ou d'un "MINITEL".

Le dispositif 1 de l'invention, notamment avec sa fonction porte-monnaie, est particulièrement adapté pour la télévision à péage.

Périodiquement, le dispositif peut servir au paiement à distance de l'abonnement à une télévision à péage et recevoir, du serveur, en échange de ce paiement, un code pour la période d'abonnement qui permettra à ce dispositif 1 de contrôler le désembrouillage de l'image.

Le dispositif 1 de l'invention peut permettre, toujours dans le cadre d'une télévision à péage, de payer uniquement pour une émission ou un film que l'utilisateur souhaite voir à une date déterminée.

Le dispositif 1, de l'invention, peut fournir un compte-rendu des films visionnés, notamment pour la mesure de l'audience, et pour le paiement des droits d'auteur.

Dans le cadre d'une animation télévisée ou similaire, il est possible d'envoyer des informations depuis une station émettrice, par voie hertzienne ou par des réseaux câblés de télévision, télématiques, informatiques, etc..., en faisant apparaître une mire sur l'écran du récepteur ou terminal, mire destinée à être lue par les phototransistors du dispositif 1 de l'invention plaqué sur l'écran. Les informations ainsi transmises peuvent permettre de sélectionner des gagnants à un jeu télévisé, et de mettre en place des jeux ou paris en direct sur la télévision.

## Revendications

1. Dispositif portable électronique pour établir une liaison sécurisée avec un serveur (S) via un terminal (13), ledit dispositif comprenant des premiers moyens d'interface (R, 10) pour au moins recevoir des données du serveur via ledit terminal, des seconds moyens d'interface comprenant un clavier (8) et un afficheur (6) pour l'entrée et la lecture de données par un utilisateur dudit dispositif, un microcalculateur (4) propre à traiter les données reçues par le dispositif, des moyens de mémorisation de données (12) à accès protégé et une source d'énergie électrique pour alimenter les divers circuits, ledit microcalculateur (4) étant programmé pour assurer une fonction d'authentification au niveau du serveur (S) en calculant, à partir d'informations provenant du serveur via ledit terminal et lesdits premiers moyens d'interface, suivant un algorithme, un code d'authentification qui est transmis au serveur via ledit terminal, un calcul de code étant également effectué par le serveur, suivant un algorithme semblable à partir desdites informations transmises audit dispositif, l'accès au serveur à partir dudit terminal étant autorisé lorsqu'il y a cohérence entre les codes calculés par le serveur (S) et le microcalculateur (4) et refusé dans le cas contraire,
caractérisé en ce que ledit microcalculateur (4) est en outre programmé pour assurer une fonction porte-monnaie permettant :
- après ladite authentification vis-à-vis du serveur (S), le chargement à partir dudit serveur (S), via ledit terminal (13) et lesdits premiers moyens d'interface (R, 10), d'une somme de valeur déterminée dans lesdits moyens de mémorisation de données (12),
- l'accès à au moins un service du type télévision à péage, jeu de télévision, télé-pari, télé-achat,
- en réponse à l'accès à un service, le prélèvement d'une somme à payer sur ladite somme stockée dans lesdits moyens de mémorisation (12).

2. Dispositif selon la revendication 1, caractérisé en ce que ledit microcalculateur (4) est programmé pour assurer le chargement de ladite somme dans lesdits moyens de mémorisation (12) en réponse à la transmission par le serveur (S) d'une information représentative de l'acceptation par ledit utilisateur dudit chargement de ladite somme dans ledit dispositif.

3. Dispositif selon l'une quelconque des revendications 1 à 2, caractérisé en ce que, conjointement au chargement de ladite somme prédéterminée, le microcalculateur (4) est adapté pour stocker dans lesdits moyens de mémorisation (12) un certificat de transaction émis par ledit serveur (S).

4. Dispositif selon l'une quelconque des revendications 1 à 3, caractérisé en ce que le chargement de ladite somme dans ledit dispositif est subordonné à l'acceptation préalable de cette transaction au niveau du serveur.

5. Dispositif selon la revendication 4, caractérisé en ce que ladite somme est une somme d'argent et en ce que son chargement dans lesdits moyens de mémorisation (12) est subordonné au contrôle par ledit serveur (S) de l'approvisionnement d'un compte (F) ouvert par ledit utilisateur.

6. Dispositif selon l'une quelconque des revendications 1 à 5, caractérisé par le fait que le microcalculateur (4) est programmé pour ne rendre le dispositif actif qu'après introduction, sur le clavier (8), d'un code confidentiel d'identification de l'utilisateur du dispositif.

7. Dispositif selon l'une quelconque des revendications 1 à 6, caractérisé en ce que lesdits premiers moyens d'interface comprennent des moyens de réception optique.

8. Dispositif selon la revendication 7, caractérisé par le fait que les moyens de réception optiques sont constitués par des phototransistors (3).

9. Dispositif selon l'une quelconque des revendications précédentes, caractérisé par le fait que le clavier (8) est un clavier numérique associé à des touches de fonction et l'afficheur (6) est du type alphanumérique.

10. Dispositif selon l'une quelconque des revendications précédentes, caractérisé par le fait que les premiers moyens d'interface comportent des moyens d'entrée/sortie (10) reliés au microcalculateur (4) pour permettre une entrée et une sortie série, et qu'un boîtier d'adaptation (26) est prévu avec un logement débouchant à l'extérieur par une ouverture (27) dans laquelle peut être engagé le dispositif, le fond du logement (27) étant équipé de moyens complémentaires des moyens d'entrée/sortie (10) du dispositif, le boîtier d'adaptation (26) étant raccordé à un câble (28) dont l'autre extrémité peut être branchée sur une prise (29) d'un terminal (23).

11. Système de transaction électronique, caractérisé en ce qu'il comprend au moins un dispositif portable électronique (1) selon l'une quelconque des revendications 1 à 11, au moins un serveur (S) et au moins un terminal (13) d'accès audit serveur (S).

## Patentansprüche

1. Tragbare elektronische Vorrichtung zur Schaffung einer geschützten Verbindung mit einem Server (S) über ein Terminal (13), die genannte Vorrichtung umfassend erste Interfacemittel (R,10), um wenigstens Daten von dem Server über das genannte Terminal zu empfangen, zweite Interfacemittel mit einer Tastatur (8) und einer Anzeige(vorrichtung) (6) zum Eingeben bzw. Lesen von Daten durch einen Anwender bzw. Benutzer der genannten Vorrichtung, einen Mikrorechner (4) zur Verarbeitung der von der Vorrichtung empfangenen Daten, Datenspeichermittel (12) mit geschütztem Zugang sowie eine elektrische Energiequelle zur Speisung der verschiedenen Schaltungen, wobei der genannte Mikrorechner (4) so programmiert ist, daß er eine Authentifikations- bzw. Berechtigungsfunktion auf der Serverebene (S) unterstützt bzw. gewährleistet, indem er auf der Grundlage von vom Server über das genannte Terminal und die genannten ersten Interfacemittel einlangenden Daten nach einem Algorithmus einen Authentifikations- bzw. Berechtigungs-Code berechnet, der über das genannte Terminal an den Server übertragen wird, wobei eine Codeberechnung gleichfalls durch den Server nach einem ähnlichen Algorithmus auf Grund der an die Vorrichtung übertragenen Daten erfolgt und der Zugang zum Server von dem genannten Terminal aus bei Kohärenz zwischen den von dem Server (S) und von dem Mikrorechner (4) berechneten Codes autorisiert, im gegenteiligen Fall versagt wird,
**dadurch gekennzeichnet**, daß
der genannte Mikrorechner (4) des weiteren zur Gewährleistung bzw. Unterstützung einer Portemonnaie- bzw. Geldbörsenfunktion programmiert ist, welche Folgendes gestattet:
- nach der genannten Authentifikation gegenüber dem genannten Server (S) wird vom Server (S) aus über den genannten Terminal (13) und die genannten ersten Interface-Mittel (R,10) eine (Geld)Summe von bestimmtem Betrag in die genannten Datenspeichermittel (12) geladen,
- den Zugang zu wenigstens einem Service des Typs Gebührenfernsehen ('pay-TV'), Fernsehspiele, Fernwetten, Fernkauf,
- als Folge des Zugangs zu einem Service die Abbuchung einer zu zahlenden Summe von der genannten in den Speichermitteln (12) gespeicherten Einlagesumme.

2. Vorrichtung nach Anspruch 1, dadurch gekennzeichnet, daß der genannte Mikrorechner (4) so programmiert ist, daß er die Ladung der genannten Summe in die genannten Speichermittel (12) in Abhängigkeit davon gewährleistet bzw. unterstützt, daß vom Server (S) eine Information übertragen wird, die repräsentativ für die Annahme der Ladung der genannten Summe in die Vorrichtung durch den Anwender/Benutzer ist.

3. Vorrichtung nach einem der Ansprüche 1 bis 2, dadurch gekennzeichnet daß in Verbindung mit dem Laden der genannten vorgegebenen Summe der Mikrorechner zur Aufbewahrungsspeicherung eines von dem genannten Server (S) übertragenen Transaktions-Zertifikats in den Speichermitteln (12) ausgebildet ist.

4. Vorrichtung nach einem der Ansprüche 1 bis 3, dadurch gekennzeichnet, daß das Laden der genannten Summe in die genannte Vorrichtung der vorhergehenden Annahme dieser Transaktion auf der Serverebene untergeordnet ist.

5. Vorrichtung nach Anspruch 4, dadurch gekennzeichnet, daß die genannnte Summe eine Geldsumme ist und daß das Laden dieser Summe in die genannte Vorrichtung der Kontrolle durch den Server (S) untergeordnet ist, daß ein von dem Anwender/ Benutzer eröffnetes Konto (F) aufgefüllt ist.

6. Vorrichtung nach einem der Ansprüche 1 bis 5, dadurch gekennzeichnet, daß der Mikrorechner (4) so programmiert ist, daß er die Vorrichtung erst nach Eingabe eines vertraulichen Identifikationscodes des Anwenders/Benutzers der Vorrichtung auf der Tastatur (8) aktiviert.

7. Vorrichtung nach einem der Ansprüche 1 bis 6, dadurch gekennzeichnet, daß die genannten ersten Interfacemittel optische Empfangsmittel aufweisen.

8. Vorrichtung nach Anspruch 7, dadurch gekennzeichnet, daß die optischen Empfangsmittel von Phototransistoren gebildet werden.

9. Vorrichtung nach einem der vorhergehenden Ansprüche, dadurch gekennzeichnet, daß die Tastatur (8) eine Funktionstasten zugeordnete numerische Tastatur ist und daß die Anzeige (6) vom alphanumerischen Typ ist.

10. Vorrichtung nach einem der vorhergehenden Ansprüche, dadurch gekennzeichnet, daß die ersten Interfacemittel mit dem Mikrorechner (4) verbundene Eingangs-/Ausgangsmittel (10) für eine serielle Ein- und Ausgabe aufweisen, und daß ein Adapterkasten bzw. -gehäuse (26) mit einer in einer äußeren Öffnung (27) mündenden Aufnahme vorgesehen ist, in welche die Vorrichtung eingesetzt werden kann, wobei der Boden der Aufnahme (27) mit zu den Eingangs-/Ausgangsmitteln (10) der Vorrichtung komplementären Mitteln versehen ist und der Adapterkasten bzw. -gehäuse (26) mit einem Kabel (28) verbunden ist, das mit seinem anderen Ende an eine Steckdose (29) eines Terminals angeschlossen werden kann.

11. Elektronisches Transaktions-System, dadurch gekennzeichnet, daß es wenigstens eine tragbare elektronische Vorrichtung (1) gemäß einem der Ansprüche 1 bis 10, wenigstens einen Server (S) und wenigstens ein Zugangsterminal (13) zu dem genannten Server (S) umfaßt.

## Claims

1. Portable electronic device for establishing a security-protected link with a server (S) via a terminal (13), the said device comprising first interface means (R, 10) for at least receiving data from the server via the said terminal, second interface means comprising a keyboard (8) and a display (6) for inputting and reading data by a user of the said device, a microcomputer (4) suitable for processing the data received by the device, protected-access data storage means (12) and a source of electrical energy for feeding the various circuits, the said microcomputer (4) being programmed to perform an authentication function within the server (S) by calculating, from information originating from the server via the said terminal and the said first interface means, according to an algorithm, an authentication code which is transmitted to the server via the said terminal, a code calculation also being performed by the server, according to a similar algorithm on the basis of the said information transmitted to the said device, access to the server from the said terminal being authorized when there is a match between the codes calculated by the server (S) and the microcomputer (4) and denied in the opposite case,
characterized in that the said microcomputer (4) is additionally programmed to carry out a purse function enabling:
- after said authentication with respect to the server (S), the loading from said server (S), through said terminal (13) and said first interface means (R, 10), of a sum of determined value in said data storage means (12),
- access to at least a service of a type such as pay television, television game, remote betting, home shopping,
- in response to access to a service, the withdrawal of a sum to be paid from said sum stored in said data storage means (12).

2. Device according to Claim 1, characterized in that said microcomputer (4) is programmed to perform the loading of said sum in said data storage means (12) in response to transmission by the server (S) of information representative of the acceptance by said user of said loading of said sum in said device.

3. Device according to any one of Claims 1 to 2, characterized in that, in conjunction with the loading of said predetermined sum, said microcomputer (4) is arranged to store in said data storage means (12) a transaction certificate issued by said server (S).

4. Device according to any one of Claims 1 to 3, characterized in that the loading of said sum in said device depends on the prior acceptance of this transaction within the server.

5. Device according to claim 4, characterized in that said sum is a sum of money and in that its loading in said data storage means (12) depends on the checking by said server (S) of the credit of an account (F) opened by said user.

6. Device according to any one of Claims 1 to 5, characterized in that the microcomputer (4) is programmed so as to activate the device only after keying in on the keyboard (8) a confidential identification code of the user of the device.

7. Device according to any one of Claims 1 to 6, characterized in that the said first interface means comprise optical reception means.

8. Device according to Claim 7, characterized in that the optical reception means consist of phototransistors (3).

9. Device according to any one of the preceding claims, characterized in that the keyboard (8) is a numerical keyboard associated with function keys and the display (6) is of the alphanumeric type.

10. Device according to any one of the preceding claims, characterized in that the first interface means include input/output means (10) linked to the microcomputer (4) in order to allow serial input and output, and in that an adaptation box (26) is provided with a housing opening to the outside via an aperture (27) into which the device can be engaged, the bottom of the housing (27) being equipped with means which are complementary to the input/output means (10) of the device, the adaptation box (26) being connected to a cable (28) the other end of which can be plugged into a socket (29) of a terminal (13).

11. Electronic transaction system, characterized in that it comprises at least a portable electronic device (1) according to any one of claims 1 to 10, at least a server (S) and at least a terminal (13) for access to said server (S).
